# EUROPÄISCHE PATENTANMELDUNG

(11) **EP 2 587 084 A2**
(43) Veröffentlichungstag der Anmeldung: **01.05.2013**
(21) Anmeldenummer: 12007215.2
(22) Anmeldetag: 18.10.2012
(51) Int. Cl.: F16D 3/74

(54) **"Verfahren zur Herstellung einer elastischen Wellenkupplung"**

(30) Priorität: 28.10.2011 DE 102011117154
(71) Anmelder: Hackforth GmbH, 44653 Herne (DE)
(72) Erfinder: Gödecke, Gunnar, 58313 Herdecke (DE); Böhmer, Jürgen, 44795 Bochum (DE)
(74) Vertreter: Isfort, Olaf

(57) **Zusammenfassung**

Die Erfindung betrifft ein Verfahren zur Herstellung einer elastischen Wellenkupplung, wobei wenigstens ein Elastomerkörper (1) jeweils mit wenigstens zwei Anschlussplatten (2) durch Vulkanisation zu einem Kupplungskörperverbund (3) verbunden wird. Es ist Aufgabe der Erfindung, ein verbessertes Verfahren zur Herstellung einer elastischen Wellenkupplung zu schaffen. Hierzu schlägt die Erfindung vor, dass der Kupplungskörperverbund (3) nach dem Vulkanisationsvorgang entsprechend einer vorgegebenen Dimensionierung zugeschnitten wird, und dass in einem weiteren Arbeitsschritt Schnittstellen (4) an den Anschlussplatten (2) angebracht werden, die zur Verbindung mit Antriebs- oder Abtriebselementen eines Antriebsstrangs dienen.

## Beschreibung

Die Erfindung betrifft ein Verfahren zur Herstellung einer elastischen Wellenkupplung, wobei wenigstens ein Elastomerkörper jeweils mit wenigstens zwei Anschlussplatten durch Vulkanisation zu einem Kupplungskörperverbund verbunden wird.

Derartige Verfahren sind zur Herstellung elastischer Wellenkupplungen bekannt. Hierbei werden ein oder auch mehrere Elastomerkörper, welche - von der Antriebs- zur Abstriebsseite gesehen - parallel oder in Reihe geschaltet sein können, an Anschlussplatten aus Metall oder Faserverbundkunststoff anvulkanisiert. Hierdurch entsteht eine Kupplungskörperverbund als zentraler Bestandteil einer elastischen Kupplung, in welcher der Elastomerkörper ein auf Schub beanspruchbares Federvolumen bildet. Standardmäßig sind im Stand der Technik feste Anschlüsse - meist in Form von Flanschen - an den Anschlussplatten angebracht. Diese dienen zur (direkten oder indirekten) Verbindung mit An- oder Abtriebselementen (z.B. Motorwelle bzw. Propellerwelle bei Schiffsantrieben) eines Antriebsstrangs.

Eine solche Kupplung beschreibt beispielsweise EP 1 164 305 A2. Sie offenbart eine elastische Kupplung zum Einbau in eine drehmomentübertragende Antriebsverbindung mit Anschlussteilen und einem dazwischen befindlichen und an diese direkt anvulkanisierten Elastomerringkörper. Die Anschlussteile dienen unmittelbar zur Verbindung mit der Welle einer Arbeitsmaschine. Sie sind somit Teil des Kupplungskörperverbunds und nehmen bei der Herstellung der Kupplung am Vulkanisationsvorgang teil.

Die Herstellung derartiger Kupplungen hat Nachteile. Dies beruht darauf, dass die Anschlussteile mitsamt den darin integrierten Schnittstellen zur Verbindung mit dem Antriebsstrang am Vulkanisationsvorgang teilnehmen. Aufgrund der Vielzahl unterschiedlicher Maschinenanschlüsse ist eine große Anzahl unterschiedlicher Anschlussteile notwendig. Dieses führt zu einer großen Varianz in Bezug auf die am Vulkanisationsprozess teilnehmenden Bauteile.

Dieses Problem wird dadurch potenziert, dass Kupplungen unterschiedlicher Dimensionierungen (für unterschiedliche zu übertragende Antriebsleistungen/Drehmomente) herstellbar sein müssen. Das bedeutet, dass eine Vielzahl von Vulkanisationsformen für unterschiedliche Kupplungsgrößen und für unterschiedliche Anschlusskonfigurationen vorgehalten werden muss. Dadurch wird das herkömmliche Herstellungsverfahren prohibitiv teuer.

Weitere Probleme ergeben sich aus folgenden Gründen: Dadurch dass die Anschlussteile einschließlich der Schnittstellen bei aus dem Stand der Technik bekannten Herstellungsmethoden fest mit dem Elastomerkörper verbunden sind, nehmen diese während des Vulkanisationsprozesses Einfluss auf die technischen Eigenschaften der fertigen Kupplung. Dünnwandige, leichte oder auch dickwandige, schwere Teile verändern durch die auftretenden Drücke und Temperaturen während des Vulkanisationsvorgangs ihre Geometrie und führen so zu Gestaltabweichungen des Elastomerkörpers. Auch der Abkühlprozess des Kupplungskörperverbundes verursacht als Schrumpfprozess Materialeigenspannungen, die die technischen Eigenschaften der Kupplung verschlechtern und große Fertigungstoleranzen verursachen. Die genannten Probleme treten sowohl bei geschlossenen Anschlussplatten als auch bei segmentierten Kupplungskörperverbunden auf.

Sofern Kupplungskörperverbunde mit Elastomerkörpern aus unterschiedlichen Materialien hergestellt werden sollen, ergibt sich zudem das Problem, dass das unterschiedliche Vulkanisations- und Abkühlverhalten berücksichtigt werden muss, was die Herstellung präziser Kupplungen zusätzlich erschwert.

Es ist daher Aufgabe der Erfindung, ein verbessertes Verfahren zur Herstellung einer elastischen Wellenkupplung zu schaffen.

Zur Lösung dieser Aufgabe schlägt die Erfindung ausgehend von einem Verfahren der eingangs angegebenen Art vor, dass der Kupplungskörperverbund nach dem Vulkanisationsvorgang entsprechend einer vorgegebenen Dimensionierung zugeschnitten wird, und dass in einem weiteren Arbeitsschritt Schnittstellen an den Anschlussplatten angebracht werden, die zur Verbindung mit Antriebs- oder Abtriebselementen eines Antriebsstrangs dienen.

Das hier dargestellte Herstellungsverfahren nutzt somit drei Verfahrensschritte. In einem ersten Verfahrensschritt wird ein standardisierter Kupplungskörperverbund, bestehend aus mindestens einem Elastomerkörper zwischen zwei Anschlussplatten, durch Vulkanisation hergestellt. In einem zweiten Schritt wird dieser Kupplungskörperverbund entsprechend der gewünschten Dimensionierung zugeschnitten. Anschließend werden in einem weiteren Schritt, d.h. nach der Vulkanisierung, Schnittstellen (z.B. Flansche) an den Anschlussplatten angebracht, die zur Verbindung mit Antriebs- oder Abtriebselementen eines Antriebsstrangs dienen.

Der hierdurch gegenüber dem Stand der Technik erreichte Vorteil ist, dass die Anschlussteile nicht an dem Vulkanisationsvorgang teilnehmen. Somit wird stets ein gleichartig ausgebildeter Kupplungskörperverbund hergestellt, welcher lediglich eine Vulkanisierform benötigt. Die Vulkanisierform und die darin vorgehenden Prozesse sind für die späteren Parameter bzw. Leistungsdaten der Kupplung von großer Bedeutung. Dadurch, dass nur eine Vulkanisierform verwendet wird, wird zum einen ein immer gleiches Vulkanisierprodukt erzielt und zum anderen eine erhebliche Kostenersparnis erreicht.

Auch bei der Nutzung nur einer Vulkanisierform mit z.B. konstanter Elementgesamtlänge (in Axialrichtung der Kupplung) können dennoch unterschiedliche Elastomerabmessungen erreicht werden, indem die Dickenverhältnisse von Elastomerkörper und Anschlussplatten gegenläufig variiert werden. Auch der Schrägungswinkel der Verbindung zwischen Elastomerkörper und Anschlussplatte kann variiert werden, ohne dass eine andere Vulkanisierform benötigt wird. Gemäß der Erfindung lassen sich also mit nur einer Vulkanisierform unterschiedliche Elastizitäten bzw. Verlustleistungskapazitäten des Kupplungskörperverbundes erzielen.

Durch den anschließenden Arbeitsschritt der Zuschneidung des vulkanisierten Kupplungskörperverbundes gemäß der Erfindung wird eine flexible Herstellung zu geringen Kosten ermöglicht. Zur Herstellung von unterschiedlich dimensionierten Kupplungen wird nämlich als Ausgangspunkt stets ein gleichgroßer vulkanisierter Kupplungskörperverbund benutzt. Dieser wird nach der Vulkanisation auf die gewünschte Größe zugeschnitten und mit individuellen Schnittstellen versehen.

Die in bzw. an den Anschlussplatten angeordneten Schnittstellen können wie allgemein üblich ausgestaltet sein. Die Schnittstellen können Flansche oder Wellenstücke oder ähnliches sein, die zu dem jeweiligen Antriebsstrang korrespondieren.

Eine Ausführungsvariante der Erfindung sieht vor, dass der Kupplungskörperverbund mittels Wasserstrahlschneiden zugeschnitten wird. Wasserstrahlschneiden hat sich für das Zuschneiden der individuell dimensionierten Kupplungskörperverbunde als besonders vorteilhaft erwiesen. Es treten nämlich keine erhöhten Schneidetemperaturen auf, welche sich negativ auf die Eigenschaften des Elastomerkörpers sowie der Verbindung zwischen den Anschlussplatten und dem Elastomerkörper auswirken. Das Wasserstrahlschneiden kann in Form von Reinwasserstrahlschneiden durchgeführt werden, bei dem lediglich die Strahlenergie des Wassers ausgenutzt wird. Alternativ kann dem Wasser aber auch ein Schneidmittel (ein Abrasiv), wie beispielsweise Granat oder Korund, beigemengt werden, um die Schneidleistung zu erhöhen. Mittels Wasserstrahlschneiden können weitgehend beliebig geformte Kupplungskörperverbunde hergestellt werden, was die individuelle und dennoch relativ kostengünstige Fertigung von elastischen Wellenkupplungen ermöglicht. Gleichzeitig mit dem Elastomerkörper werden wahlweise beide oder auch nur eine Anschlussplatte durchschnitten.

Eine bevorzugte Ausgestaltung der Erfindung sieht vor, dass in einem weiteren Verfahrensschritt in den Kupplungskörperverbund mindestens eine Lüftungsöffnung und/oder mindestens ein Lüftungskanal eingebracht wird. Die Einbringung der Lüftungsöffnungen oder der Lüftungskanäle kann ebenfalls durch Wasserstrahlschneiden erfolgen. Die Lüftungskanäle erstrecken sich vorteilhaft von einer Anschlussplatte zu der anderen, gegenüberliegenden Anschlussplatte, wodurch der Elastomerkörper über seine gesamte Dicke von den Lüftungskanälen durchsetzt ist. Die Positionen der Lüftungsöffnungen und -kanäle kann durch Verwendung des Wasserstrahlschneidens auf einfache Art und Weise individuell variiert werden, ohne dass hierdurch die Herstellungskosten merklich erhöht werden. Auch eine Variation der Anzahl der Lüftungsöffnungen oder -kanäle in dem Kupplungskörperverbund kann so ohne hohen Kostenaufwand individuell variiert werden. Zudem können Größe und Form der Lüftungsöffnungen vielfältig gestaltet werden. Dies vergrößert die Freiheiten bei der Auslegung.

Eine Ausführungsvariante der Erfindung sieht vor, dass der Kupplungskörperverbund ringförmig ausgebildet ist. Dann kann der Kupplungskörperverbund nach dem Vulkanisationsvorgang zu zwei oder mehr in Umfangsrichtung hintereinander liegenden Kupplungskörpersegmenten zugeschnitten werden. Bei einem segmentierten Kupplungskörper ergeben sich die bekannten Vorteile, beispielsweise bei sehr voluminösen Kupplungen eine einfachere Transportierbarkeit der Einzelteile an den Einsatzort. Ebenso ergeben sich zusätzliche konstruktionstechnische Freiheitsgrade.

Eine Verfahrensvariante sieht vor, dass die elastische Kupplung als mehrstufige Kupplung mit zwei oder mehr Elastomerkörpern hergestellt wird. Hierdurch lässt sich eine Kupplung mit mehreren Kupplungsstufen realisieren, welche für verschiedene Maschinendrehmomente unterschiedliche Dämpfungsgrade bereitstellt.

Ausführungsbeispiele der Erfindung werden im Folgenden anhand der Figuren näher erläutert. Es zeigen:
- Figur 1:: Erfindungsgemäß hergestellter, standardisierter Kupplungskörperverbund in Schnittdarstellung;
- Figur 2:: Schnittdarstellung einer elastischen Wellenkupplung mit Kupplungskörperverbund gemäß Figur 1 nach Zuschneiden und Anbringen von Schnittstellen,
- Figur 3:: alternatives Ausführungsbeispiel einer erfindungsgemäß hergestellten elastischen Wellenkupplung in Schnittdarstellung.

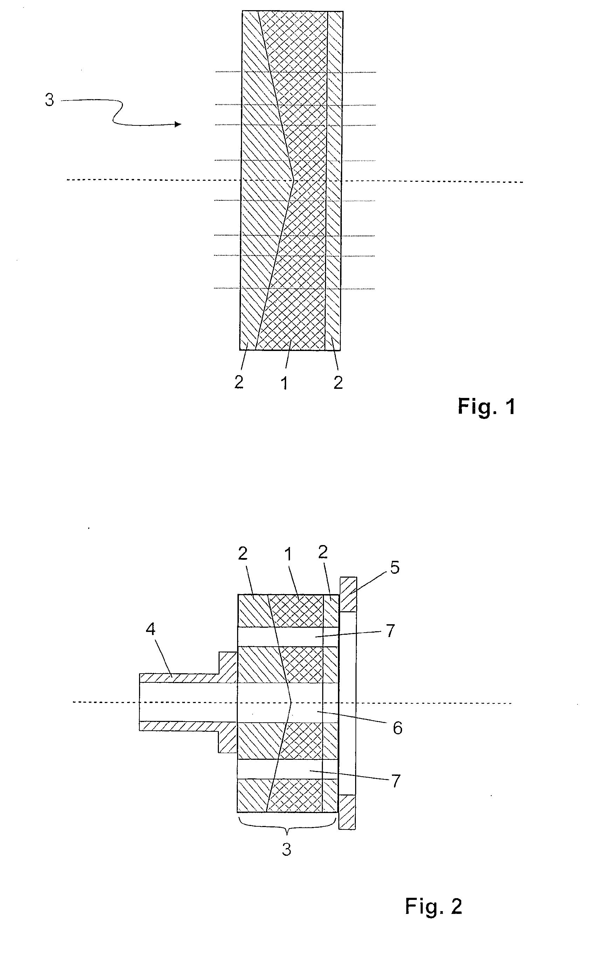

Figur 1 zeigt schematisch einen erfindungsgemäß hergestellten, standardisierten Kupplungskörperverbund. Dieser umfasst einen Elastomerkörper 1, der sich zwischen zwei Anschlussplatten 2 befindet. Der Kupplungskörperverbund ist insgesamt mit der Bezugsziffer 3 bezeichnet.

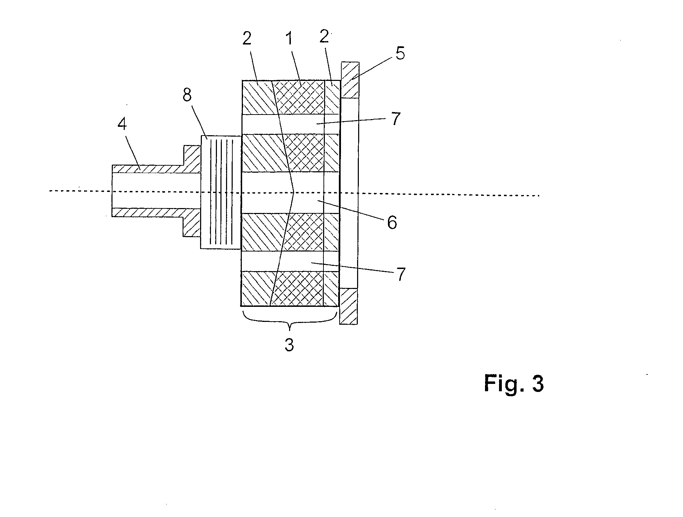

Die Figuren 2 und 3 zeigen fertige elastische Wellenkupplungen, bei denen an den Anschlussplatten 2 Schnittstellen 4 und 5 angebracht sind, die zur Verbindung mit (nicht dargestellten) Antriebs- und Abtriebselementen eines Antriebsstrangs dienen.

Die in den Figuren 2 und 3 schematisch dargestellten elastischen Kupplungen werden in einem dreistufigen Verfahren hergestellt:
In einem ersten Schritt wird der Elastomerkörper 1 (oder auch mehrere Elastomerkörper 1) zwischen zwei Anschlussplatten 2 eingebracht und an diese in einem geeigneten Vulkanisationswerkzeug anvulkanisiert. Die Anschlussplatten 2 können grundsätzlich jede beliebige Form haben, insbesondere als Vollplatte oder auch Ringelement ausgebildet sein. Die zu vulkanisierenden Elemente, d.h. der/die Elastomerkörper 1 und die Anschlussplatten 2, werden dabei in eine Standard-Vulkanisationsform gegeben und unter geeigneten Bedingungen vulkanisiert. Durch diesen Vorgang mit nur einer Vulkanisationsform entsteht ein standardisierter Kupplungskörperverbund 3 mit immer gleichen Außenabmessungen. Trotz Nutzung nur einer Vulkanisationsform können dennoch unterschiedliche Abmessungen des Elastomerkörpers 1 erreicht werden, indem die Dickenverhältnisse von Elastomerkörper 1 und Anschlussplatten 2 gegenläufig variiert werden. Auch der Schrägungswinkel der Verbindung zwischen Elastomerkörper 1 und Anschlussplatte 2 kann variiert werden, ohne dass eine andere Vulkanisationsform benötigt wird. Gemäß der Erfindung lassen sich also mit nur einer Vulkanisationsform unterschiedliche Elastizitäten bzw. Verlustleistungskapazitäten des Kupplungskörperverbundes 3 erzielen.

In einem zweiten Schritt wird der Kupplungsköperverbund 3 entsprechend der gewünschten Dimensionierung zugeschnitten. Somit kann der Kupplungskörperverbund 3 beispielsweise im Durchmesser reduziert werden, in einzelne Kupplungskörpersegmente zerlegt werden oder auch mit Lüftungsöffnungen versehen werden. Das Zuschneiden erfolgt vorteilhaft mittels Wasserstrahlschneiden, jedoch können auch andere Schneidverfahren angewandt werden. Bei dem Schneidvorgang werden der Elastomerkörper 1 und die Anschlussplatten 2 gleichzeitig durchschnitten. In Figur 1 sind die für das Ausführungsbeispiel vorgesehenen Schnittführungen gestrichelt eingezeichnet.

Die Figuren 2 und 3 zeigen den Kupplungskörperverbund 3 nach dem Zuschneiden. Der Durchmesser wurde reduziert. Außerdem wurden ein zentraler Hohlraum 6 und über den Umfang verteilte axiale Lüftungskanäle 7 erzeugt.

In einem dritten Schritt werden an die individuelle Verbindungssituation angepasste Schnittstellen 4 und 5 (Flansche), mit den Anschlussplatten 2 (z.B. durch Schweißen oder Schrauben) verbunden. Diese Schnittstellen können im einfachsten Fall Bohrungen, zur Aufnahme von Schrauben oder Bolzen, oder Anschläge, die zur Drehmomentübertragung an anderen Elementen des Antriebsstrangs anschlagen, sein. Die Schnittstellen 4, 5 können, wie in Figur 2 gezeigt, direkt mit den Anschlussplatten 2 verbunden sein. Ebenso kann, wie in Figur 3 skizziert, ein weiteres Kupplungselement 8, wie z.B. ein Membrankupplungselement, zwischengeschaltet sein. Bei der Anbringung der Schnittstellen 4, 5 an dem Kupplungskörperverbund 3 werden Toleranzen, die sich aufgrund des Vulkanisationsprozesses nicht vermeiden lassen, ausgeglichen.

## Patentansprüche

1. Verfahren zur Herstellung einer elastischen Wellenkupplung, wobei wenigstens ein Elastomerkörper (1) jeweils mit wenigstens zwei Anschlussplatten (2) durch Vulkanisation zu einem Kupplungskörperverbund (3) verbunden wird,
**dadurch gekennzeichnet, dass** der Kupplungskörperverbund (3) nach dem Vulkanisationsvorgang entsprechend einer vorgegebenen Dimensionierung zugeschnitten wird, und dass in einem weiteren Arbeitsschritt Schnittstellen (4) an den Anschlussplatten (2) angebracht werden, die zur Verbindung mit Antriebs- oder Abtriebselementen eines Antriebsstrangs dienen.

2. Verfahren nach Anspruch 1, **dadurch gekennzeichnet, dass** der Kupplungskörperverbund (3) mittels Wasserstrahlschneiden zugeschnitten wird.

3. Verfahren nach Anspruch 1 oder 2, **dadurch gekennzeichnet, dass** in den Kupplungskörperverbund (3) mindestens eine Lüftungsöffnung und/oder mindestens ein Lüftungskanal eingebracht wird.

4. Verfahren nach einem der vorhergehenden Ansprüche, **dadurch gekennzeichnet, dass** der Kupplungskörperverbund (3) ringförmig ausgebildet ist.

5. Verfahren nach Anspruch 4, **dadurch gekennzeichnet, dass** der Kupplungskörperverbund (3) nach dem Vulkanisationsvorgang zu zwei oder mehr in Umfangsrichtung hintereinander liegenden Kupplungskörpersegmenten zugeschnitten wird.

6. Verfahren nach einem der vorhergehenden Ansprüche, **dadurch gekennzeichnet, dass** die elastische Kupplung als mehrstufige Kupplung mit zwei oder mehr Elastomerkörpern (1) hergestellt wird.
